# EUROPÄISCHE PATENTANMELDUNG

(11) **EP 3 348 458 A1**
(43) Veröffentlichungstag der Anmeldung: **18.07.2018**
(21) Anmeldenummer: 17151353.4
(22) Anmeldetag: 13.01.2017
(51) Int. Cl.: B62H 3/00, E04H 6/00

(54) **FAHRZEUGSCHUTZVORRICHTUNG**

(71) Anmelder: Flinz, Julia, 44225 Dortmund (DE)
(72) Erfinder: Flinz, Julia, 44225 Dortmund (DE)
(74) Vertreter: Müller & Schubert

(57) **Zusammenfassung**

Die vorliegende Erfindung betrifift eine Fahrzeugschutzvorrichtung, die ein Basiselement (10) und ein Abdeckelement (11) aufweist. Die Fahrzeugschutzvorrichtung (1) ist dadurch gekennzeichnet, dass das Basiselement (10) einen Boden (100) aufweist und das Abdeckelement (11) über mindestens ein Gelenk (12) mit dem Basiselement (10) verbunden ist, das zu dem Boden (100) des Basiselementes (10) nach oben versetzt angeordnet ist.

## Beschreibung

Die vorliegende Erfindung betrifft eine Fahrzeugschutzvorrichtung.

Um Fahrzeuge vor Verunreinigungen und Diebstahl sowie vor Wettereinflüssen zu schützen, ist es bekannt dies in eine Garage zu fahren. In einigen Fällen, beispielsweise in der Großstadt kann es aber zu Situationen kommen, dass keine Garage zur Verfügung steht. Zum Schutz der Fahrzeuge, zumindest gegen Verunreinigungen, ist es insbesondere für Motorrädern kann eine Abdeckhaube zu verwenden. Diese Abdeckhauben bestehen aus Planen-Material und werden an dem, Fahrzeug festgebunden.

Zudem ist beispielsweis aus der US 5533616 A ein Gehäuse für ein Motorrad bekannt. Das Gehäuse ist ein robustes Gehäuse, das eine Basis aufweist, durch die Grundanker geführt werden können oder an der das Fahrzeug befestigt werden kann. Zwei Gehäuseteile sind an der Basis verschwenkbar angebracht. Die zwei Gehäuseteile können voneinander weg aufgeklappt werden.

Mit diesem Gehäuse kann zwar ein Schutz des Fahrzeuges vor Verunreinigungen und gegen Diebstahl und Wettereinflüsse geschützt werden. Allerdings ist das Gehäuse schwer zu handhaben, da die beiden Gehäuseteile eine große Größe aufweisen müssen, um das Fahrzeug nach dem aufeinander zu bewegen zu umgeben. Der Fahrer muss daher zunächst das eine Gehäuseteil öffnen und dieses soweit nach außen verschwenken, dass dieses auf dem Boden liegt. Anschließend muss das zweite Gehäuseteil auf diese Weise verschwenkt und auf den Boden gelegt werden.

Aufgabe der vorliegenden Erfindung ist es daher eine Fahrzeugschutzvorrichtung zu schaffen, die zum einen das Fahrzeug zuverlässig vor Verunreinigungen und Wettereinflüssen schützt und zum anderen auf einfache Weise bedient werden kann.

Der Erfindung liegt die Erkenntnis zugrunde, dass diese Aufgabe gelöst werden kann, indem ein Teil eines Basiselementes der Fahrzeugschutzvorrichtung zumindest einen Teil einer Seite der Fahrzeugschutzvorrichtung darstellt.

Erfindungsgemäß wird die Aufgabe durch eine Fahrzeugschutzvorrichtung gelöst, die ein Basiselement und ein Abdeckelement aufweist. Die Fahrzeugschutzvorrichtung ist, dadurch gekennzeichnet, dass das Basiselement einen Boden aufweist und das Abdeckelement über mindestens ein Gelenk mit dem Basiselement verbunden ist, das zu dem Boden des Basiselementes nach oben versetzt angeordnet ist.

Als Fahrzeugschutzvorrichtung wird erfindungsgemäß ein Gehäuse verstanden, in dem mindestens ein Fahrzeug vollständig aufgenommen werden kann. Das Fahrzeug kann beispielsweise ein Motorrad, Fahrrad, E-Bike, Trike oder ein Rollstuhl sein. Die Fahrzeugschutzvorrichtung stellt vorzugsweise ein Gehäuse dar, das in dem geschlossenen Zustand das Fahrzeug zu allen Seiten umgibt. Im geöffneten Zustand sind die Elemente der Fahrzeugschutzvorrichtung erfindungsgemäß weiterhin teilweise miteinander verbunden. Erfindungsgemäß weist die Fahrzeugschutzvorrichtung ein Basiselement und ein Abdeckelement auf. Es liegt aber auch im Rahmen der Erfindung, dass mehrere Abdeckelemente vorgesehen sind. Im Folgenden wird die Erfindung unter Bezugnahme auf die Ausführungsform mit einem Abdeckelement beschrieben. Das Basiselement bildet den unteren Teil der Fahrzeugschutzvorrichtung. Das Basiselement umfasst hierbei einen Boden, das heißt ist nach unten abgeschlossen. Das Abdeckelement, das auch als Deckel bezeichnet werden kann, ist über mindestens ein Gelenk mit dem Basiselement verbunden. Mittels des Gelenkes, das auch als Scharnier bezeichnet werden kann, kann das Abdeckelement bezüglich des Basiselementes verschwenkt und vorzugsweise nach oben geklappt werden. Das Gelenk ist erfindungsgemäß zu dem Boden des Basiselementes nach oben versetzt an dem Basiselement vorgesehen. Das Gelenk ist vorzugsweise so vorgesehen, dass dessen Drehachse in der Horizontalen liegt.

Indem bei der Fahrzeugschutzvorrichtung das mindesten eine Abdeckelement mit dem Basiselement über mindestens ein Gelenk verbunden ist, das in einem Abstand zum Boden des Basiselementes angeordnet ist, wird das Öffnen der Fahrzeugschutzvorrichtung erleichtert. Insbesondere wird der Winkel um den das Abdeckelement zu dem Basiselement verschwenkt werden, um die Fahrzeugschutzvorrichtung zu öffnen verringert. Indem das Basiselement zudem einen Boden umfasst kann zum einen das Eintreten von Verunreinigungen von unten in die Fahrzeugschutzvorrichtung verhindert werden. Zudem wird es auch möglich die Fahrzeugschutzvorrichtung mit einem darin eingebrachten Fahrzeug zu bewegen, beispielsweise zu transportieren, da das Fahrzeug auf dem Boden steht.

Gemäß einer bevorzugten Ausführungsform weist das Basiselement eine sich von dem Boden zumindest bereichsweise nach oben erstreckende Schutzwand auf. Die Schutzwand ist vorzugsweise einteilig mit dem Boden ausgebildet. Insbesondere kann die Schutzwand durch Biegen oder bei der Herstellung des Basiselementes an dem Boden in einem bestimmten Winkel und/oder einer bestimmten Krümmung angeformt beziehungsweise ausgebildet werden.

Die Schutzwand erstreckt sich vorzugsweise zumindest an der Vorderseite der Fahrzeugschutzvorrichtung und kann sich weiterhin zumindest entlang eines Teils der Seiten der Fahrzeugschutzvorrichtung erstrecken. Durch das vorsehen einer Schutzwand wird zum einen der Eintritt von Verunreinigungen und Flüssigkeiten in die Fahrzeugschutzvorrichtung verhindert. Zum anderen wird die Stabilität der Fahrzeugschutzvorrichtung verbessert und so beispielsweise ein Transport der Fahrzeugschutzvorrichtung mit einem darin vorgesehenen Fahrzeug verbessert.

Gemäß einer Ausführungsform weist das Basiselement eine Einfahrseite auf, an der die Schutzwand zumindest bereichsweise ausgespart ist. Die Einfahrseite liegt der Vorderseite der Fahrzeugschutzvorrichtung gegenüber und kann daher auch als Rückseite bezeichnet werden. Indem im Bereich der Rückseite des Basiselementes keine oder zumindest keine durchgängige Schutzwand vorgesehen ist, kann das Fahrzeug ohne Hindernis in die Fahrzeugschutzvorrichtung geschoben oder gefahren werden.

Gemäß einer bevorzugten Ausführungsform weist die Schutzwand an der Vorderseite des Basiselementes eine größere Höhe auf, als an den weiteren Seiten des Basiselementes. Die weiteren Seiten des Basiselementes sind insbesondere die Seitenwände und die Rückseite des Basiselementes. Vorzugsweise ist das Gelenk mittels dessen das Abdeckelement mit dem Basiselement verbunden ist, im oberen Bereich und vorzugsweise an der Oberseite der Schutzwand im Bereich der Vorderseite der Fahrzeugschutzvorrichtung vorgesehen. Indem das Gelenk an der höchsten Stelle des Basiselementes und insbesondere der Schutzwand des Basiselementes vorgesehen ist, ist der Betrag, um den das Abdeckelement zum Öffnen der Fahrzeugschutzvorrichtung nach oben verschwenkt werden muss, gering.

Gemäß einer bevorzugten Ausführungsform weist die Vorderseite des Basiselementes eine Kappenform auf. Die Kappe kann auch als Kuppel bezeichnet werden. Die Kappe oder Kuppel ist dabei so ausgerichtet, dass diese nach vorne zusammenläuft. Vorzugsweise wird die Vorderseite daher durch eine gewölbte Schutzwand gebildet, die sich konvex von dem Boden des Basiselementes nach oben erstreckt und besonders bevorzugt einen Teil eines Ellipsoiden bildet, der nach vorne verschlossen und nach hinten offen ist.

Indem die Vorderseite des Basiselementes eine Kappenform aufweist, können zum einen aerodynamische Vorteile erzielt werden. Insbesondere wird der Luftwiderstand, den die Fahrzeugschutzvorrichtung bei einem Transport auf einem offenen Anhänger generiert verringert. Ein weiterer Vorteil besteht darin, dass durch die Form der Vorderseite im Inneren der Fahrzeugschutzvorrichtung ein Raum gebildet wird, in dem außer einem Teil des Fahrzeuges auch weitere Gegenstände aufgenommen werden können. Der Bereich der Vorderseite kann somit als zusätzlicher Stauraum dienen.

Gemäß einer bevorzugten Ausführungsform ist zumindest das Abdeckelement aus einem verstärkten Kunststoff, vorzugsweise glasfaserverstärkten Kunststoff hergestellt. Die Verwendung dieses Materials bringt insbesondere den Vorteil mit sich, dass das Abdeckelement auf einfache Weise hergestellt werden kann. Auch komplexe Formen können nämlich bei einem verstärkten Kunststoff, insbesondere bei Fiberglas, auf einfache Weise gebildet werden. Zudem weist der verstärkte Kunststoff eine gute Festigkeit und Stabilität auf und besitzt dennoch ein geringes Gewicht.

Der Vorteil dieser Ausführungsform liegt somit auch darin, dass das Gewicht zumindest des Abdeckelementes der Fahrzeugschutzvorrichtung gering ist. Somit kann das Abdeckelement ohne großen Kraftaufwand bezüglich des Basiselementes nach oben verschwenkt werden und die Fahrzeugschutzvorrichtung damit geöffnet werden. Zudem ist auch das Gesamtgewicht der Fahrzeugschutzvorrichtung gering. Besonders bevorzugt besteht auch das Basiselement zumindest teilweise aus einem verstärkten Kunststoff, insbesondere aus Fiberglas. Hierdurch kann die Fahrzeugschutzvorrichtung aufgrund des geringen Gesamtgewichts einfach transportiert, beispielsweise auf einen Anhänger eines Autos gebracht werden.

Gemäß einer Ausführungsform weist das Basiselement mindestens eine Durchlassöffnung für mindestens eine Fixiervorrichtung auf. Die Durchlassöffnung ist vorzugsweise in dem Boden des Basiselementes vorgesehen. Als Fixiervorrichtung kann eine Vorrichtung zur Befestigung der Fahrzeugschutzvorrichtung an einem Untergrund darstellen. Alternativ oder zusätzlich kann die Fixiervorrichtung zur Befestigung mindestens eines Rades an der Unterseite der Fahrzeugschutzvorrichtung dienen. Vorzugsweise ragen die Räder über die Unterseite des Basiselementes nach unten herausragt. Hierdurch kann die Fahrzeugschutzvorrichtung einfach bewegt, beispielsweise auf einen Anhänger eines Autos gefahren werden.

Gemäß einer bevorzugten Ausführungsform ist zwischen dem Basiselement und dem Abdeckelement mindestens ein Dämpfungselement angeordnet. Als Dämpfungselement wird beispielsweise eine Gasdruckfeder verwendet. Durch das Dämpfungselement kann die Bewegung des Abdeckelementes bezüglich des Basiselementes unterstützt werden. Beispielsweise kann das mindestens eine Dämpfungselement so angeordnet sein, dass dieses beim Vorgang des Öffnens der Fahrzeugschutzvorrichtung, das heißt beim Verschwenken des Abdeckelementes nach oben die Bewegung des Abdeckelementes unterstützt. Hierdurch wird das Öffnen der Fahrzeugschutzvorrichtung vereinfacht. Zudem kann durch die durch das mindestens eine Dämpfungselement aufgebrachte Kraft auch ein Herunterfallen des Abdeckelementes aus der geöffneten Position, das heißt der nach oben verschwenkten Position verhindert werden.

Gemäß einer Ausführungsform ist zwischen dem Basiselement und dem Abdeckelement eine Dichtung angeordnet. Die Dichtung kann ein Dichtstreifen sein, der an der Oberkante des Basiselementes und/oder an der Unterkante des Abdeckelementes vorgesehen ist, beispielsweise angeklebt ist. Durch die Dichtung wird zum einen das Eintreten von Verunreinigungen in das Innere der Fahrzeugschutzvorrichtung verhindert. Zum anderen kann eine Beschädigung der Elemente der Fahrzeugschutzvorrichtung beim Schließen der Fahrzeugschutzvorrichtung verhindert werden, die bei einem Aufprallen des Abdeckelementes auf das Basiselement ohne Dichtung und auch ohne Dämpfungselement zu befürchten wäre.

Gemäß einer bevorzugten Ausführungsform ist in zumindest einem Teilbereich des Bodens des Basiselementes mindestens eine Verstärkungsplatte vorgesehen Diese Ausführungsform ist insbesondere bei Fahrzeugschutzvorrichtungen von Vorteil, die aus einem Kunststoff, insbesondere verstärkten Kunststoff bestehen. Bei diesem Material kann durch das Vorsehen von Verstärkungsplatten ein Verformen und damit Beschädigen der Fahrzeugschutzvorrichtung am Boden verhindert werden. Die Verstärkungsplatten bestehen vorzugsweise aus Metall. Die Verstärkungsplatten können in den Boden eingefasst oder auf diesen aufgebracht sein. Vorzugsweise wird zumindest eine Verstärkungsplatte an dem Boden vorgesehen, die sich in Längsrichtung der Fahrzeugschutzvorrichtung erstreckt. Diese sich längs erstreckende Verstärkungsplatte kann als Führungsspur oder Fahrspur in der Fahrzeugschutzvorrichtung verwendet werden. Alternativ oder zusätzlich kann mindestens eine Verstärkungsplatte in dem Bereich einer Durchlassöffnung in dem Boden des Basiselementes vorgesehen sein. Bei dieser Ausführungsform wird durch Verstärkungsplatte die Durchlassöffnung verstärkt und ein Ausreißen des Materials im Bereich der Durchlassöffnung wird verhindert. Indem die Verstärkungsplatten lediglich einen Teil des Bodens des Basiselementes abdecken, ist das Gesamtgewicht der Fahrzeugschutzvorrichtung nur geringfügig gegenüber einem nicht verstärkten Boden erhöht.

Gemäß einer bevorzugten Ausführungsform ist an dem Basiselement mindestens eine Haltevorrichtung zur Halterung eines Fahrzeuges, insbesondere an mindestens einem Fahrzeugrad vorgesehen. Die Haltevorrichtung kann beispielsweise aus einem Blech oder einer Verstärkungsplatte herausgearbeitet sein. Insbesondere kann durch die Haltevorrichtung ein Spalt gebildet werden, in den ein Fahrzeugrad des in der Fahrzeugschutzvorrichtung aufzubewahrenden Fahrzeuges seitlich gehalten werden kann. Bei einer Ausführungsform, bei der die Haltevorrichtung nicht in dem Basiselement eingearbeitet ist, sondern durch ein separates Bauteil, wie beispielsweise eine Verstärkungsplatte oder ein Blech gebildet ist, kann die Grundform des Basiselementes weiterhin einfach sein. Die Herstellung einer komplexen Form zur Aufnahme zumindest eines Fahrzeugrades in dem Basisteil selber ist hierbei nicht erforderlich.

Gemäß einer Ausführungsform ist im Inneren des Basiselementes mindestens eine Ablageplatte zur Ablage von Zubehör vorgesehen. Alternativ zu einer Platte kann auch ein Haken oder ein anderes Befestigungselement verwendet werden. Vorzugsweise ist die Ablageplatte im vorderen Bereich des Basiselementes vorgesehen. Bei der bevorzugten Ausführungsform, bei der durch die Schutzwand des Basiselementes im vorderen Bereich ein Stauraum gebildet wird, ist die Ablageplatte oder andere Befestigungsvorrichtung, vorzugsweise in dem vorderen Bereich des Basiselementes an der Innenseite der Schutzwand vorgesehen. Diese Ausführungsform weist den Vorteil auf, dass durch vorsehen der Ablageplatte oder anderen Befestigungsvorrichtung an dem Basiselement, diese beim Öffnen der Fahrzeugschutzvorrichtung nicht bewegt wird und somit Gegenstände, die auf oder an dieser Befestigungsvorrichtung gehalten sind, nicht herunterfallen können. Das Zubehör, das auf der Ablageplatte oder an einer anderen Befestigungsvorrichtung gehalten werden kann, ist beispielsweise ein Schutzhelm.

Gemäß einer bevorzugten Ausführungsform ist an der Fahrzeugschutzvorrichtung ein Empfänger für eine Fernbedienung zum Verschwenken des Abdeckelementes gegenüber dem Basiselement vorgesehen. Hierdurch kann die Fahrzeugschutzvorrichtung per Fernbedienung geöffnet werden.

Gemäß einer weiteren Ausführungsform ist in der Fahrzeugschutzvorrichtung mindestens eine Beleuchtungsvorrichtung vorgesehen.

Gemäß einer weiteren Ausführungsform ist an dem Basiselement mindestens eine nach außen ragende Öse vorgesehen. Die Öse(n) können zur Befestigung der Fahrzeugschutzvorrichtung an einem Untergrund dienen. Alternativ oder zusätzlich kann mindestens eine der Ösen Einhängen in eine Zugvorrichtung dienen, mittels derer die Fahrzeugschutzvorrichtung beispielsweise auf einen Anhänger eines Autos gezogen werden kann. Insbesondere für diese Funktion ist vorzugsweise mindestens eine Öse im Bereich der Vorderseite des Basiselementes angeordnet.

Die vorliegende Erfindung wird im Folgenden erneut unter Bezugnahme auf die beiliegenden Figuren beschrieben. Es zeigen:
Figur 1: eine schematische, perspektivische Ansicht einer Ausführungsform der erfindungsgemäßen Fahrzeugschutzvorrichtung in einem teilweise geöffneten Zustand;
Figur 2: eine schematische, perspektivische Explosionsansicht der Ausführungsform der erfindungsgemäßen Fahrzeugschutzvorrichtung nach Figur 1;
Figur 3: eine schematische Ansicht auf die Innenseite der Teile der Fahrzeugschutzvorrichtung nach Figur 1 in einem geöffneten Zustand der Fahrzeugschutzvorrichtung;
Figur 4: eine schematische Draufsicht auf die Ausführungsform der Fahrzeugschutzvorrichtung nach Figur 1 im geschlossenen Zustand; und
Figur 5: eine schematische Detailansicht einer Ausführungsform einer Haltevorrichtung in einer Ausführungsform der erfindungsgemäßen Fahrzeugschutzvorrichtung.

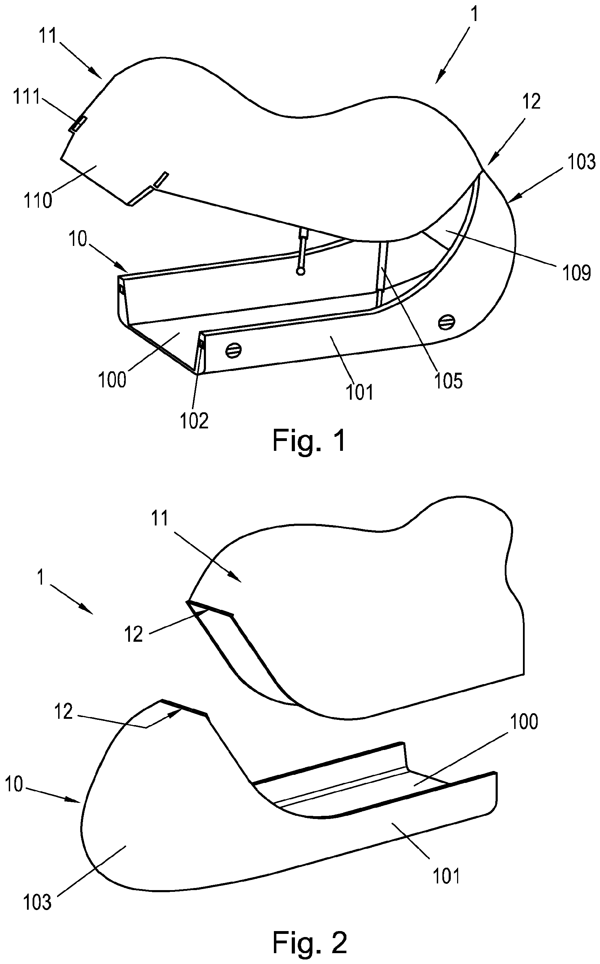

In Figur 1 ist eine schematische Perspektivansicht einer Ausführungsform der erfindungsgemäßen Fahrzeugschutzvorrichtung 1 gezeigt. Die Fahrzeugschutzvorrichtung 1 besteht aus einem Basiselement 10 und deinem Abdeckelement 11. Wie sich aus Figur 2, die eine Explosionsansicht der Fahrzeugschutzvorrichtung 1 zeigt, entnehmen lässt, sind das Basiselement 10 und das Abdeckelement 11 über ein Gelenk 12, das auch als Scharnier bezeichnet werden kann, miteinander verbunden.

Das Basiselement 10 weist einen Boden 100 auf. An den Rändern des Bodens 100 erstreckt sich bereichsweise eine Schutzwand 101. In der dargestellten Ausführungsform ist an der Rückseite der Fahrzeugschutzvorrichtung 1 die Schutzwand 101 ausgespart. Diese Seite bildet somit eine Einfahrseite der Fahrzeugschutzvorrichtung 1. An der Vorderseite der Fahrzeugschutzvorrichtung 1 weist die Schutzwand 101 eine Höhe auf, die größer ist als die Höhe der Schutzwand 101 an den Seiten des Basiselementes 10. In der dargestellten Ausführungsform ist die Vorderseite 103 des Basiselementes 10 so geformt, dass diese eine Kappenform aufweist. Insbesondere weist die Vorderseite 103 des Basiselementes 10 eine Teilellipsoid-Form auf, die sich zwischen dem Boden 100 und der höchstens Stelle des der Schutzwand 101 erstreckt. Die Vorderseite 103 der Fahrzeugschutzvorrichtung 1 bildet somit eine Kuppel aus, die die Fahrzeugschutzvorrichtung 1 nach vorne abschließt. Hierdurch wird eine aerodynamisch günstige Form erzeugt.

Das Gelenk 12, über das das Basiselement 10 mit dem Abdeckelement 11 verschwenkbar verbunden ist, ist an der höchsten Stelle der Vorderseite 103 des Basiselementes 10 angeordnet.

Das Gelenk 12 ist zudem an dem vorderen Ende des Abdeckelementes 11 angeordnet. Das Abdeckelement 11 stellt eine nach unten offene Schalenform dar. Am hinteren Ende des Abdeckelementes 11 weist dieses eine Verschlussplatte 110 auf. Die Höhe der Verschlussplatte 110 entspricht der Höhe der Schutzwand 101 am hinteren Ende des Basiselementes 10.

Die Form des Abdeckelementes 11, insbesondere dessen Unterkante ist der Form der Oberkante der Schutzwand 101 angepasst. Im geschlossenen Zustand der Fahrzeugschutzvorrichtung 1 liegt somit die gesamte Unterkante des Abdeckelementes 11 an der Oberkante der Schutzwand 101 und die Unterkante der Verschlussplatte 110 an der Oberseite des rückwärtigen Endes des Bodens 100 auf. Somit ist die Fahrzeugschutzvorrichtung 1 vollständig verschlossen. Entlang der Oberkante der Schutzwand 101 und / oder entlang der Unterkante der Abdeckung 11 kann eine nicht dargestellte Dichtung vorgesehen sein.

An der Rückseite des Basiselementes 10 sind in der dargestellten Ausführungsform Verschlussvorrichtungen 102 vorgesehen. Diese Verschlussvorrichtungen 102 wirken mit Verschlussvorrichtungen 111, die an der Rückseite des Abdeckelementes 11 vorgesehen sind, zusammen. Hierdurch können die beiden Elemente 10, 11 in dem geschlossenen Zustand, das heißt dem Zustand, in dem die Oberkante der Schutzwand 101 an der Unterkante der Abdeckung 11 anliegt, gehalten werden.

Im Inneren der Fahrzeugschutzvorrichtung 1 sind Dämpfelemente 105 vorgesehen. Diese können beispielsweise Gasdruckfedern sein. Die Dämpfelemente 105 sind vertikal ausgerichtet. Somit kann die Bewegung des Abdeckelementes 11 bezüglich des Basiselementes 10 unterstützt werden. Vorzugsweise wird die Bewegung des Öffnens des Abdeckelementes 11, das heißt das Verschwenken des Abdeckelementes 11 um das Gelenk 12 nach oben durch die Dämpfelemente 105 unterstützt. Die Dämpfelemente 105 sind vorzugsweise drehbar an dem Basiselement 10 und dem Abdeckelement 11 befestigt, damit diese der Schwenkbewegung, die das Abdeckelement 11 ausführt, folgen können.

Der Innenraum der Fahrzeugschutzvorrichtung 1 ist so groß gestaltet, dass in diesen ein Fahrzeug, wie beispielsweise ein Motorrad, Fahrrad oder Rollstuhl im geschlossenen Zustand aufgenommen werden kann, ohne, dass dieses an dem Abdeckelement 11 anliegt.

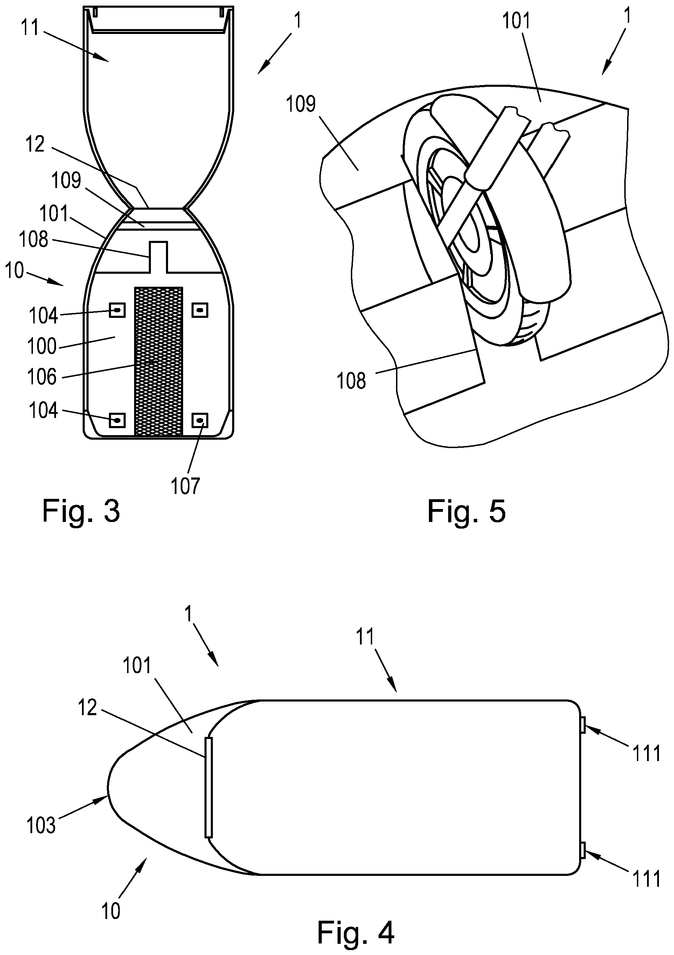

Das Basiselement 10 der Fahrzeugschutzvorrichtung 1 kann die in Figur 3 gezeigten Elemente aufweisen. Insbesondere kann auf dem Boden des Basiselementes mindestens eine Verstärkungsplatte 106, 107 vorgesehen sein. In der in Figur 3 gezeigten Ausführungsform sind vier kleinere Verstärkungsplatten 107 über die Fläche des Bodens des Basiselementes verteilt in dem Boden vorgesehen. Die Verstärkungsplatten 106, 107 können in den Boden eingefasst oder auf diesen aufgebracht sein. In den Verstärkungsplatten 107 sind Durchlassöffnungen 104 eingebracht. Die Durchlassöffnungen 104 erstrecken sich auch durch das Material des Bodens 100 unterhalb der Verstärkungsplatte 107 Die Durchlassöffnungen 104 können beispielsweise als Durchlass für Fixiervorrichtungen dienen, mittels derer die Fahrzeugschutzvorrichtung 1 an einem Untergrund befestigt werden kann. Alternativ können die Durchlassöffnungen 104 aber auch zur Befestigung von Rädern oder Rollen dienen, die unterhalb des Bodens 100 zumindest teilweise über diesen hinausragen. Zudem ist in der dargestellten Ausführungsform eine längliche Verstärkungsplatte 106 vorgesehen, die sich von der Einfahrseite des Basiselementes 10 aus nach vorne erstreckt. Diese Verstärkungsplatte 106 kann als Aufstandsfläche beziehungsweise Fahrspur für das Fahrzeug in die Fahrzeugschutzvorrichtung 1 dienen. Soll die Fahrzeugschutzvorrichtung 1 für ein Fahrzeug mit mehr als zwei Rädern, beispielsweise ein Trike oder einen Rollstuhl verwendet werden, sind vorzugsweise zwei sich in Längsrichtung der Fahrzeugschutzvorrichtung 1 erstreckende Verstärkungsplatten 106 vorgesehen.

Das Fahrzeug, insbesondere ein Motorrad, wird so in die Fahrzeugschutzvorrichtung 1 gebracht, dass das Vorderrad zu der vordersten Stelle der Vorderseite 103 des Basiselementes 10 beabstandet ist.

An dem Basiselement 10 ist vorzugsweise eine Haltevorrichtung 108 zum Halten des Fahrzeuges vorgesehen. Diese Haltevorrichtung 108 kann wie beispielsweise in Figur 5 gezeigt, eine Haltevorrichtung 108 zum Halten des Vorderrades des Fahrzeuges, beispielsweise eines Motorades sein. In der dargestellten Ausführungsform wird die Haltevorrichtung 108 durch eine Haltewand gebildet, in der eine Vertiefung mit seitlicher Führung für das Vorderrad eingebracht ist.

An der Innenseite der Vorderseite 103 des Basiselementes 10 ist vorzugsweise eine Ablageplatte 109 oder eine andere Befestigungsvorrichtung für Zubehör vorgesehen. Die Ablageplatte 109 kann in einem vertikalen Abstand zu dem Boden 100 des Basiselementes 10 vorgesehen sein. Da die Form der Vorderseite 103 des Basiselementes 10 vorzugsweise eine Kappen- beziehungsweise Kuppelform aufweist und das Vorderrad des Fahrzeuges bei einem Motorrad den vordersten Teil darstellt, ist der Raum im Inneren der Vorderseite 103 des Basiselementes 10 frei und kann beispielsweise für eine Ablageplatte 109 oder eine andere Befestigung für Zubehör verwendet werden.

### Bezugszeichenliste

- 1: Fahrzeugschutzvorrichtung
- 10: Basiselement
- 100: Boden
- 101: Schutzwand
- 102: Verschlusselement
- 103: Vorderseite
- 104: Durchlassöffnung
- 105: Dämpfelement
- 106: Verstärkungsplatte
- 107: Verstärkungsplatte
- 108: Haltevorrichtung
- 109: Ablageplatte

- 11: Abdeckelement
- 110: Verschlussplatte
- 111: Verschlussvorrichtung

- 12: Gelenk

## Patentansprüche

1. Fahrzeugschutzvorrichtung, die ein Basiselement (10) und ein Abdeckelement (11) aufweist, **dadurch gekennzeichnet, dass** das Basiselement (10) einen Boden (100) aufweist und das Abdeckelement (11) über mindestens ein Gelenk (12) mit dem Basiselement (10) verbunden ist, das zu dem Boden (100) des Basiselementes (10) nach oben versetzt angeordnet ist.

2. Fahrzeugschutzvorrichtung nach Anspruch 1, **dadurch gekennzeichnet, dass** das Basiselement (10) eine sich von dem Boden (100) zumindest bereichsweise nach oben erstreckende Schutzwand (101) aufweist.

3. Fahrzeugschutzvorrichtung nach Anspruch 2, **dadurch gekennzeichnet, dass** die Schutzwand (101) an der Vorderseite (103) des Basiselementes (10) eine größere Höhe aufweist, als an den weiteren Seiten des Basiselementes (10).

4. Fahrzeugschutzvorrichtung nach einem der Ansprüche 1 bis 3, **dadurch gekennzeichnet, dass** die Vorderseite (103) des Basiselementes (10) eine Kappenform aufweist.

5. Fahrzeugschutzvorrichtung nach einem der Ansprüche 1 bis 4, **dadurch gekennzeichnet, dass** zumindest das Abdeckelement (11) aus einem verstärktem Kunststoff, insbesondere Fiberglas, besteht.

6. Fahrzeugschutzvorrichtung nach einem der Ansprüche 1 bis 5, **dadurch gekennzeichnet, dass** zwischen dem Basiselement (10) und dem Abdeckelement (11) mindestens ein Dämpfelement (105) angeordnet ist.

7. Fahrzeugschutzvorrichtung nach einem der Ansprüche 1 bis 6, **dadurch gekennzeichnet, dass** in zumindest einem Teilbereich des Bodens (100) des Basiselementes (10) mindestens eine Verstärkungsplatte (106, 107) vorgesehen ist.

8. Fahrzeugschutzvorrichtung nach einem der Ansprüche 1 bis 7, **dadurch gekennzeichnet, dass** an dem Basiselement (10) mindestens eine Haltevorrichtung (108) zur Halterung eines Fahrzeuges, insbesondere an mindestens einem Fahrzeugrad, vorgesehen ist.

9. Fahrzeugschutzvorrichtung nach einem der Ansprüche 1 bis 8, **dadurch gekennzeichnet, dass** im Inneren des Basiselementes (10) mindestens eine Ablageplatte (109) zur Ablage von Zubehör vorgesehen ist.

10. Fahrzeugschutzvorrichtung nach einem der Ansprüche 1 bis 9, **dadurch gekennzeichnet, dass** an der Fahrzeugschutzvorrichtung (1) ein Empfänger für eine Fernbedienung zum Verschwenken des Abdeckelementes (11) gegenüber dem Basiselement (10) vorgesehen ist.

11. Fahrzeugschutzvorrichtung nach einem der Ansprüche 1 bis 10, **dadurch gekennzeichnet, dass** in der Fahrzeugschutzvorrichtung (1) mindestens eine Beleuchtungsvorrichtung vorgesehen ist.

12. Fahrzeugschutzvorrichtung nach einem der Ansprüche 1 bis 11, **dadurch gekennzeichnet, dass** an dem Basiselement (10) mindestens eine nach außen ragende Öse vorgesehen ist, die vorzugsweise im Bereich der Vorderseite (103) des Basiselementes (10) angeordnet ist.
